# EUROPEAN PATENT APPLICATION

(11) **EP 4 746 309 A1**
(43) Date of publication of application: **20.05.2026**
(21) Application number: 24854497.5
(22) Date of filing: 19.08.2024
(51) Int. Cl.: H04B 7/06, H04B 17/373, H04W 72/0446, G06N 20/00

(54) **METHOD AND DEVICE FOR COMMUNICATION IN WIRELESS COMMUNICATION SYSTEM**

(30) Priority: 17.08.2023 KR 20230107947
(71) Applicant: Samsung Electronics Co., Ltd., Suwon-si, Gyeonggi-do 16677 (KR)
(72) Inventor: BAIK, Jungsuk, Suwon-si, Gyeonggi-do 16677 (KR); KANG, Jaeeun, Suwon-si, Gyeonggi-do 16677 (KR); KIM, Suhwook, Suwon-si, Gyeonggi-do 16677 (KR); KIM, Wonjun, Suwon-si, Gyeonggi-do 16677 (KR); HWANG, Byeonghun, Suwon-si, Gyeonggi-do 16677 (KR)
(74) Representative: Gulde & Partner
(86) International application number: PCT/KR2024/012272
(87) International publication number: WO 2025/037946

(57) **Abstract**

The present disclosure relates to a 5^{th} generation (5G) or 6^{th} generation (6G) communication system for supporting higher data rates after a 4^{th} generation (4G) communication system such as a long-term evolution (LTE) system. A method performed by a user equipment (UE) in a wireless communication system may include receiving, from a base station, information indicating whether the UE is to perform artificial intelligence (AI)-based channel state information (CSI) prediction, determining, based on the information, whether to perform the AI-based CSI prediction, obtaining, when performing the AI-based CSI prediction, CSI based on at least one reference signal and a first AI model, and transmitting the CSI.

## Description

### Technical Field

The present disclosure relates to a wireless communication system, and more particularly, to a method and device for performing communication based on artificial intelligence (AI).

### Background Art

Considering the development of wireless communication from generation to generation, technologies have been developed mainly for human-targeted services, such as voice calls, multimedia services, data services, etc. After the commercialization of 5^{th} generation (5G) communication systems, an exponentially increasing number of connected devices are projected to be connected to communication networks. Examples of objects connected to networks may include vehicles, robots, drones, home appliances, displays, smart sensors installed in various infrastructures, construction machinery, factory equipment, etc. Mobile devices are expected to evolve into a variety of form factors such as augmented reality (AR) glasses, virtual reality (VR) headsets, hologram devices, etc. In the 6^{th} generation (6G) era, efforts are being made to develop improved 6G communication systems to provide various services by connecting hundreds of billions of devices and objects. For these reasons, a 6G communication system is referred to as a beyond 5G communication system.

In a 6G communication system predicted to be commercialized around 2030, a peak data rate is terabyte per second (Tbps) (i.e., 1000 gigabytes per second (Gbps)), and a maximum air interface latency is 100 microseconds (µsec). That is, the transfer rate in a 6G communication system is 50 times faster than that in a 5G communication system, and the radio latency is reduced to one-tenth of that in the 5G communication system.

Implementation of 6G communication systems in a terahertz (THz) band (e.g., the frequency range between the 95 gigahertz (GHz) and 3 THz) is under consideration to achieve such high data rate and ultra-low latency. In the THz band, the importance of technologies for guaranteeing a signal transmission distance, i.e., coverage, is expected to increase due to more severe path loss and atmospheric absorption compared to a millimeter-wave (mmWave) band introduced in 5G. It is necessary to develop, as the major technologies for securing coverage, radio frequency (RF) elements, antennas, novel waveforms which have better coverage than orthogonal frequency division multiplexing (OFDM), beamforming, multiple antenna transmission technologies, such as multiple-input and multiple-output (massive MIMO), full dimensional MIMO (FD-MIMO), array antennas, and large scale antennas, and the like. In addition, novel technologies such as metamaterial-based lenses and antennas, high-dimensional spatial multiplexing technology using orbital angular momentum (OAM), reconfigurable intelligent surface (RIS), etc. have been discussed to improve the coverage of signals in the THz band.

Furthermore, to improve frequency efficiency and system networks for 6G communication systems, various technologies are being developed which include a full duplex technology for enabling uplink transmission and downlink transmission to simultaneously use the same frequency resource at the same time, a network technology using integration of satellites and high-altitude platform stations (HAPSs), a network structure innovation technology that supports mobile base stations and the like and enables optimization, automation, etc., of network operations, a dynamic spectrum sharing technology for avoiding collisions based on spectrum usage prediction, an artificial intelligence (AI)-based communication technologies that utilize AI from the design stage and internalize end-to-end AI support functions to realize system optimization, and next-generation distributed computing technologies that realize services of a complexity level beyond the limits of user equipment (UE) computing capabilities by utilizing ultrahigh performance communication and computing resources (mobile edge computing (MEC), cloud, etc.). In addition, ongoing attempts are being made to further enhance a connectivity between devices, further optimize networks, promote the softwarization of network entities, and increase the openness of wireless communications through the design of new protocols to be used in 6G communication systems, implementation of hardware-based security environments, development of mechanisms for safe use of data, and development of technologies on a method of maintaining privacy.

Due to the research and development of these 6G communication systems, the next hyper-connected experience is expected to be provided through hyper-connectivity of the 6G communication systems, which includes not only connectivity between things but also connectivity between humans and things. Specifically, 6G communication systems are expected to provide services such as truly immersive extended reality (XR), high-fidelity mobile holograms, digital replica, etc. In addition, by providing services such as remote surgery, industrial automation, and emergency response via the 6G communication systems through enhancement of security and reliability, such technologies may be applied in various fields such as industry, medical care, automobiles, home appliances, etc.

### Disclosure of Invention

### Technical Problem

According to the embodiment of the present disclosure, a method and device for performing CSI reporting using AI may be provided, which compensate for a situation in which a channel changes between transmission of a CSI reference signal (CSI-RS), reporting of CSI, and actual use of the CSI.

Technical problems to be solved by an embodiment of the present disclosure are not limited to the technical problems described and other technical problems may be inferred from embodiments described below.

### Solution to Problem

According to an embodiment of the present disclosure, a method performed by a user equipment (UE) in a wireless communication system is provided. The method may include receiving, from a base station, information indicating whether the UE is to perform artificial intelligence (AI)-based channel state information (CSI) prediction, determining, based on the information, whether to perform the AI-based CSI prediction, obtaining, when performing the AI-based CSI prediction, CSI based on at least one reference signal and a first AI model, and transmitting the CSI.

According to an embodiment of the present disclosure, a method performed by a base station in a wireless communication system is provided. The method may include transmitting, to a UE, information indicating whether the UE is to perform AI-based CSI prediction, and receiving CSI from the UE. When the UE performs the AI-based CSI prediction, the CSI may be obtained based on at least one reference signal and a first AI model.

According to an embodiment of the present disclosure, a UE in a wireless communication system is provided. The UE may include a transceiver and at least one processor coupled to the transceiver. The at least one processor may be configured to receive, from a base station, information indicating whether the UE is to perform AI-based CSI prediction, determine, based on the information, whether to perform the AI-based CSI prediction, obtain, when performing the AI-based CSI prediction, CSI based on at least one reference signal and a first AI model, and transmit the CSI to the base station.

According to an embodiment of the present disclosure, a base station in a wireless communication system is provided. The base station may include a transceiver and at least one processor coupled to the transceiver. The at least one processor may be configured to transmit, to a UE, information indicating whether the UE is to perform AI-based CSI prediction, and receive CSI from the UE. When the UE performs the AI-based CSI prediction, the CSI may be obtained based on at least one reference signal and a first AI model.

### Brief Description of Drawings

FIG. 1 is a diagram illustrating an artificial intelligence (AI)/machine learning (ML) model.
FIG. 2 is a diagram illustrating channel state information (CSI) reporting according to an embodiment of the present disclosure.
FIG. 3 is a diagram illustrating AI-based CSI prediction according to an embodiment of the present disclosure.
FIGS. 4 and 5 are diagrams illustrating an AI model according to an embodiment of the present disclosure.
FIG. 6 is a diagram illustrating a user equipment (UE) performing AI-based CSI prediction, according to an embodiment of the present disclosure.
FIG. 7 is a diagram illustrating a base station performing AI-based CSI prediction, according to an embodiment of the present disclosure.
FIG. 8 is a flowchart of a method of performing CSI reporting according to an embodiment of the present disclosure.
FIG. 9 is a flowchart illustrating transmitting status information related to performing AI-based CSI prediction, according to an embodiment of the present disclosure.
FIG. 10 is a flowchart of a method of performing CSI reporting, according to an embodiment of the present disclosure.
FIG. 11 is a flowchart of a method of performing CSI reporting, according to an embodiment of the present disclosure.
FIG. 12 is a block diagram schematically illustrating a configuration of a base station according to an embodiment of the present disclosure.
FIG. 13 is a block diagram schematically illustrating a configuration of a UE, according to an embodiment of the present disclosure.

### Mode for the Invention

Hereinafter, embodiments of the present disclosure will be described in detail with reference to the accompanying drawings.

In the following description of the present disclosure, descriptions of technical features that are well known in the art to which the present disclosure pertains and are not directly related to the present disclosure are omitted. This is for clearly describing the essence of the present disclosure without obscuring it by omitting the unnecessary descriptions.

In addition, terms described below are defined by taking functions described in the present disclosure into account and may vary according to practices or a user's or operator's intention. Therefore, definition of the terms should be made based on the overall descriptions in the present specification.

Other technical features may become readily apparent to those of ordinary skill in the art from the following figures, descriptions, and claims.

Prior to setting forth a detailed description of "Mode for the Invention" below, it may be advantageous to provide definitions of certain terms and phrases used throughout the present specification.

The term "couple" and derivatives thereof refer to any direct or indirect communication between two or more elements, regardless of whether the elements are in physical contact with one another. The terms "transmit," "receive," and "communicate," as well as derivatives thereof, encompass both direct communication and indirect communication. The terms "include" and "comprise," as well as derivatives thereof, denote inclusion without limitation.

The term "or" is inclusive and means "and/or". The phrase "associated with", as well as derivatives thereof, means including, being included within, interconnecting with, containing, being contained within, connecting to or with, being coupled to or with, being communicable with, cooperating with, interleaving with, juxtaposed with, being proximate to, being linked to or with, having, having the characteristics of, having a relationship to or with, and the like.

Furthermore, in the present disclosure, when a component is referred to as being "connected" or "coupled" to another component, it should be understood that the component may be directly connected or coupled to the other component, but may also be connected or coupled to the other component via another intervening component therebetween unless there is a particular description contrary thereto.

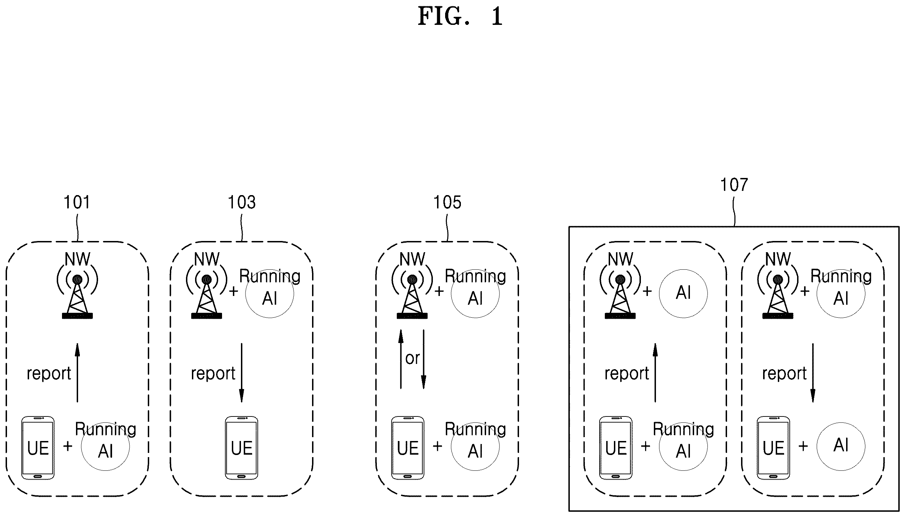

Because the present disclosure may be subject to various modifications and have numerous embodiments, particular embodiments are illustrated in the drawings and will be described in detail in the detailed description. However, FIGS. 1 to 13 discussed below and various embodiments used to describe the principles of the present disclosure in this specification are merely examples and should not be construed as limiting the scope of the present disclosure in any way.

Those skilled in the art will appreciate that the principles of the present disclosure may be implemented in any suitably arranged system or device. Furthermore, those skilled in the art will understand that the principles of the present disclosure may be implemented in any suitably configured wireless communication system.

For the same reason, in the accompanying drawings, some components are exaggerated, omitted, or schematically illustrated. Furthermore, the size of each element does not entirely reflect an actual size thereof. In addition, numbers (e.g., a first, a second, etc.) used in the description of the specification are merely identification symbols for distinguishing one element from another.

Advantages and features of the present disclosure and methods of accomplishing the same will be more readily appreciated by referring to the following description of embodiments and the accompanying drawings. However, the present disclosure is not limited to embodiments disclosed below and may be implemented in various different forms, and these embodiments are provided so that the present disclosure will be thorough and complete and will fully convey the scope of the disclosure to those of ordinary skill in the art, and the present disclosure is defined only by the scope of the claims. Throughout the specification, the same reference numerals denote the same or corresponding components.

Hereinafter, a base station (or BS) is an entity responsible for allocating resources to a user equipment (UE), and may be at least one of a next-generation Node B (gNode B), an evolved Node B (eNode B), a Node B (or an x Node B (x is an alphabet including g and e)), a radio access unit, a base station controller, a satellite, an airborne vehicle, or a node on a network. In the present disclosure, a base station may be used interchangeably with a network (or NW).

A UE may include a mobile station (MS), a vehicle, a satellite, an airborne vehicle, a cellular phone, a smartphone, a computer, or a multimedia system capable of performing communication functions.

Furthermore, in the present disclosure, a cell may represent an area covered by a single base station in wireless communication. Cells may be classified into mega cells, macro cells, micro cells, and pico cells based on their size, but these are merely examples, and the types of cells are not limited to those stated above.

As used herein, a downlink (or DL) may refer to a radio transmission link through which a base station transmits a signal to a UE, and an uplink (or UL) may refer to a radio transmission link through which a UE transmits a signal to a base station. Additionally, there may be a sidelink (or SL), which refers to a radio transmission link for a signal transmitted from one UE to another.

As used in the following description, terms referring to broadcast information, terms referring to control information, terms related to communication coverage, terms referring to state changes (e.g., events), terms referring to network entities, terms referring to messages, terms referring to components of a device, etc. are provided as examples for convenience of descriptions.

Although an embodiment of the present disclosure may be described below using a long-term evolution (LTE), LTE-Advanced (LTE-A), or 5^{th} generation (5G) system as an example, the embodiment of the present disclosure may be applied to other communication systems having similar technical backgrounds and channel configurations. For example, the other communication systems may include 5G-Advanced or New Radio (NR)-Advanced or 6^{th} generation (6G) mobile communication technology (6G or beyond 5G) developed after 5G mobile communication technology (or NR), and the term 5G below may also be a concept including LTE, LTE-A, and other similar services. The present disclosure may also be applied to other communication systems through some modifications within a range that does not significantly depart from the scope of the present disclosure, as determined by a person having skilled technical knowledge.

Hereinafter, for convenience of descriptions, the present disclosure uses terms and names defined in the LTE and NR specifications which are the latest standards defined by the 3rd Generation Partnership Project (3GPP) organization among the currently existing communication standards. However, the present disclosure is not limited to the terms and names described above, and may also be equally applied to wireless communication systems conforming to other standards.

For example, although an embodiment of the present disclosure is described by using 6G wireless communication technology (6G system) as an example, the embodiment of the present disclosure may be applied to other wireless communication systems having similar technical backgrounds and channel configurations. In another example, an embodiment of the present disclosure may be applied to NR, LTE, or LTE-A systems, which are wireless communication systems prior to NR, and furthermore, the embodiment of the present disclosure may also be applied to wireless communication systems developed after NR. Furthermore, an embodiment of the present disclosure may also be applied to other wireless communication systems through some modifications within a range that does not significantly depart from the scope of the present disclosure, as determined by a person having skilled technical knowledge.

Thus, the present disclosure is not limited to terms described below, and other terms having equivalent technical meanings may be used. Hereinafter, for convenience of descriptions, the present disclosure may use channel state information reference signal (CSI-RS) among reference signals, but the present disclosure is not limited to CSI-RS and may also be applied to reference signals described in the 3GPP standard, such as a demodulation reference signal (DMRS), a phase-tracking reference signal (PTRS), a positioning reference signal (PRS), a tracking reference signal (TRS), a remote interference management reference signal (RIM-RS), or the like.

Hereinafter, for convenience of descriptions, the present disclosure may be described using channel quality indicator (CQI) and precoding matrix indicator (PMI) from CSI as examples, but this is merely an example, and the present disclosure may also be applied to CSI-RS resource indicator (CRI), synchronization signal/physical broadcast channel block (SSB) resource indicator (SSBRI), layer indicator (LI), rank indicator (RI), layer 1 reference signal received power (L1-RSRP), layer 1 signal-to-interference-plus-noise ratio (L1-SINR), or capability index.

Hereinafter, for convenience of descriptions, the present disclosure may be described using an example in which artificial intelligence (AI)-based CSI prediction is performed in the time domain, but this is merely an example, and an embodiment of the present disclosure may be applied to at least one of the time domain, frequency domain, and spatial domain.

It will be understood that each block of a flowchart in the drawings and combinations of blocks of the flowchart may be performed by computer program instructions. These computer program instructions may be loaded onto a processor of a general-purpose computer, a special-purpose computer, or other programmable data processing equipment, and thus, the instructions performed via the processor of the computer or other programmable data processing equipment generate a means for performing functions specified in the flowchart block(s).

The computer program instructions may also be stored in a computer-executable or computer-readable memory capable of directing the computer or the other programmable data processing equipment to implement functions in a specific manner, and thus, the instructions stored in the computer-executable or computer-readable memory are capable of producing an article of manufacture including instruction means for performing the functions described in the flowchart block(s).

The computer program instructions may also be loaded into the computer or the other programmable data processing equipment, and thus, instructions for operating the computer or the other programmable data processing equipment by generating a computer-executed process when a series of operations are performed in the computer or the other programmable data processing equipment may provide operations for performing the functions described in the flowchart block(s).

Furthermore, each block may represent a module, segment, or portion of code that includes one or more executable instructions for performing specified logical function(s). It should also be noted that, in some alternative implementations, functions mentioned in blocks may occur out of order. For example, two blocks illustrated in succession may be executed substantially simultaneously, or the blocks may sometimes be executed in reverse order depending on functions corresponding thereto.

As used herein, the term '... unit' denotes a software element or a hardware element such as a field-programmable gate array (FPGA) or an application-specific integrated circuit (ASIC), and performs certain functions. However, the term '... unit' is not limited to software or hardware. The '... unit' may be configured to be in an addressable storage medium or configured to operate one or more processors.

Thus, the term '... unit' may include, for example, elements such as software elements, object-oriented software elements, class elements, and task elements, processes, functions, attributes, procedures, subroutines, segments of program code, drivers, firmware, micro-codes, circuits, data, a database, data structures, tables, arrays, and variables.

Functions provided by elements and '... units' may be combined into the smaller number of elements and '... units', or may be further divided into additional elements and '... units'. Furthermore, the elements and '... units' may be implement to operate one or more central processing units (CPUs) in a device or security multimedia card. In addition, in an embodiment, the '... unit' may include one or more processors.

FIG. 1 is a diagram illustrating an AI/machine learning (ML) model.

AI/ML models are models used in next-generation wireless communication systems, such as 6G, that leverage AI and ML to achieve higher performance and efficiency.

By using AI/ML models, a wireless communication system may improve network performance. By using AI/ML models, the wireless communication system may analyze channel characteristics and optimize signals. By using AI/ML models, the wireless communication system may analyze user behavior and preferences to provide personalized services and enhance the user experience.

By using AI/ML models, the wireless communication system may analyze network traffic and efficiently allocate network resources. By using AI/ML models, the wireless communication system may detect and recover network failures.

By using AI/ML models, the wireless communication system may optimize dynamic resource allocation across multiple frequency bands and bandwidths, thereby increasing spectrum efficiency. By using AI/ML models, the wireless communication system may utilize more frequency bands and bandwidths to support faster and more stable communications.

AI/ML models may include a one-sided AI/ML model 101, 103, or 107, a two-sided AI/ML model 105, and the like. The one-sided AI/ML model 101, 103, or 107 may be operated (or run) at a UE only, at a base station only, or separately at both the UE and the base station. The two-sided AI/ML model 105 refers to a pair of AI models where joint inference is performed, and the joint inference may be performed by both the UE and the base station.

An AI/ML model may include a bidirectional long short-term memory (Bi-LSTM) model, an LSTM model, a fully convolutional network (FCN), a mixed multi-layer perceptron (MLP-Mixer) model, a residual network (ResNet), etc., but these are merely examples and are not limited to the stated examples.

A wireless communication system may perform AI-based CSI prediction by using an AI/ML model. The AI-based CSI prediction may be performed in relation to the time domain, frequency domain, or spatial domain. The AI-based CSI prediction may employ a one-sided AI/ML model that may be operated at each of the UE and the network.

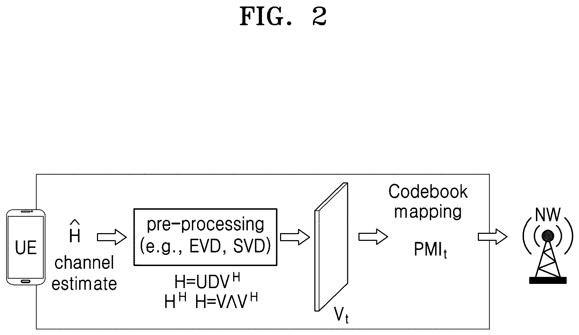

FIG. 2 is a diagram illustrating CSI reporting according to an embodiment of the present disclosure.

Services being considered for post-5G communication systems include enhanced Mobile Broadband (eMBB), Massive Machine Type Communication (mMTC), Ultra-Reliable Low-Latency Communication (URLLC), etc. To satisfy diverse services, beam management and various frequency bands may be supported.

In such situations, different channel environments may arise for each frequency band or beam. A UE may estimate or measure a channel state and report CSI for the estimated channel to a base station.

For example, the UE may transmit CSI such as RI, PMI, and CQI to the base station. The process of reporting CSI to the base station may result in significant resource consumption. According to an embodiment of the present disclosure, an AI-based channel prediction method and device for reducing the overhead of CSI-RS in multiple-input and multiple-output (MIMO) systems, etc. may be provided.

The base station may transmit an RS to the UE. The UE may obtain a channel Ĥ by estimating a channel state (channel estimation) from the received RS.

By performing preprocessing on the channel Ĥ, the UE may obtain a precoding matrix, for example, an eigenvector V. The preprocessing may include eigenvalue decomposition (EVD) or singular value decomposition (SVD). For example, the UE may generate V based on the relationship of Ĥ = UDV^{H}.

If the channel Ĥ is known, the value of V may be derived. In codebook-based CSI feedback, the UE may identify a PMI based on the value of V and transmit the PMI to the base station. For example, the UE may transmit a PMI corresponding to a codebook index that is most similar to the value of V.

A channel estimated using a reference signal, such as a CSI-RS, may operate ideally under the assumption that the channel remains unchanged during the time from when the base station transmits the CSI-RS to when the UE receives the CSI-RS, the time taken for the UE to report CSI to the base station, and the time required for the base station to perform downlink scheduling. However, in an actual system, the channel may change over time due to factors such as a channel environment and UE mobility.

According to an embodiment of the present disclosure, a method and device for performing AI-related CSI reporting in the time domain may be provided, which compensate for a situation in which channel aging occurs between transmission of a CSI-RS, reporting of CSI, and actual use of the CSI. A method and device for obtaining CSI, with scheduling delays compensated for by utilizing the obtained eigenvector V, channel H, PMI, CQI, etc. in an AI model, may be provided.

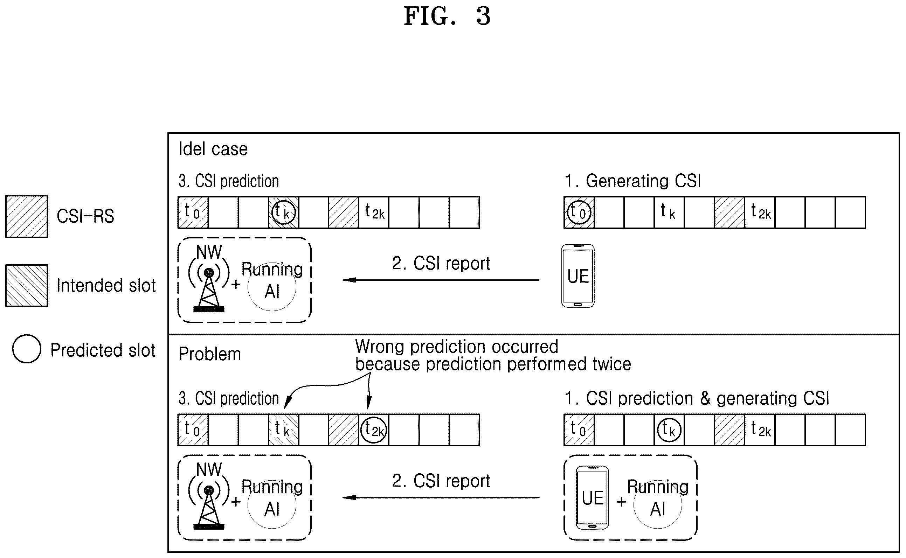

FIG. 3 is a diagram illustrating AI-based CSI prediction according to an embodiment of the present disclosure.

When performing AI-based CSI prediction, the resolution of a result may vary depending on whether a node where an AI model is operated is a UE or a base station (or a network).

When the AI model is operated at the UE, the UE may use eigenvector V, channel Ĥ, etc. as inputs to the AI model, and obtain high-resolution CSI, such as PMI and CQI, as outputs.

When the AI model is operated at the base station, a PMI quantized using a codebook or a CQI quantized based on an SINR may be used as input to the AI model, and at least one of PMI or CQI with a lower resolution than that obtained by the UE may be obtained as an output.

AI-based CSI prediction may be performed using a one-sided AI model. The one-sided AI model may be operated at the UE only, at the base station only, or separately at both the UE and the base station. When the one-sided AI model is operated at both the UE and the base station, similar to a two-sided model, a result of the AI model of the UE may be used as an input to the AI model of the base station, or vice versa. Regardless of whether the UE performs AI-based CSI prediction, the network may perform unintended AI-based CSI prediction. Even when the network expects the UE to perform AI-based CSI prediction, the UE may not perform AI-based CSI prediction.

Referring to FIG. 3, due to reasons including the UE performing unexpected AI-based CSI prediction or failing to perform expected AI-based CSI prediction, a situation may arise where CSI is predicted for a slot other than an intended slot in order to compensate for a scheduling delay and the like. In this case, channel estimation failure may occur, resulting in problems such as reduced system throughput.

According to an embodiment of the present disclosure, in connection with performing of AI-based CSI prediction, the network may control an operation of the UE related to the UE's prediction, and reduce or prevent errors in channel estimation that may occur during the AI-based CSI prediction.

According to an embodiment of the present disclosure, in a wireless communication system, an AI-based CSI prediction operation of the UE may be controlled using signaling between the base station and the UE. This may reduce channel estimation errors when dual prediction is performed by the UE and the base station, and prevent degradation of channel estimation performance due to the UE failing to perform CSI prediction.

According to an embodiment of the present disclosure, the UE may perform AI-based CSI prediction for a time resource designated by the base station, and the network may perform AI-based CSI prediction for a time interval after the designated time resource. By doing so, a scheduling delay may be compensated for.

According to an embodiment of the present disclosure, by performing AI-based CSI prediction, the UE may compensate for a time delay between transmission of CSI-RS and CSI reporting. By performing AI-based CSI prediction, the network may compensate for a delay between CSI reporting and scheduling.

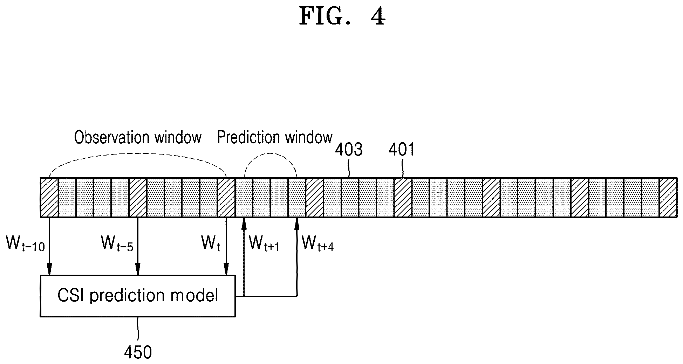

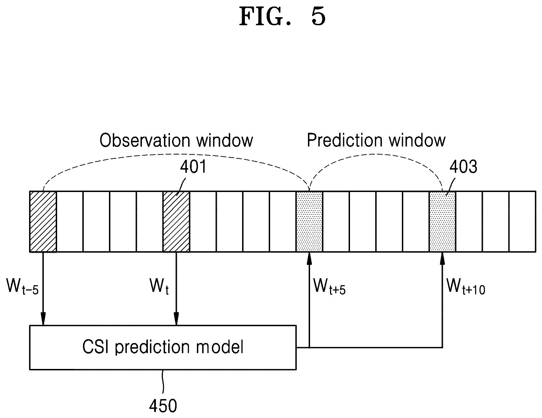

FIGS. 4 and 5 are diagrams illustrating an AI model according to an embodiment of the present disclosure.

According to the present disclosure, functions related to AI are performed via a processor and memory. The processor may consist of one or a plurality of processors. In this case, the one or plurality of processors may be a general-purpose processor such as a CPU, an application processor (AP), or a digital signal processor (DSP), a dedicated graphics processor such as a graphics processing unit (GPU) or a vision processing unit (VPU), or a dedicated AI processor such as a neural processing unit (NPU).

The one or plurality of processors may control processing of input data according to predefined operation rules or AI model stored in the memory. When the one or plurality of processors are a dedicated AI processor, the dedicated AI processor may be designed with a hardware structure specialized for processing a particular AI model.

The predefined operation rules or AI model are created via a training process. In this case, the creation via the training process means that the predefined operation rules or AI model set to perform desired characteristics (or purposes) are created by training a base AI model (or deep learning model) based on a large number of training data via a learning algorithm.

The training process may be performed on the device itself on which AI is performed according to the present disclosure, or via a separate server and/or system. Examples of a learning algorithm may include, but are not limited to, supervised learning, unsupervised learning, semi-supervised learning, and reinforcement learning.

An AI model may consist of a plurality of neural network layers. Each of the plurality of neural network layers has a plurality of weight values and may perform neural network operations via calculations between a result of computations in a previous layer and the plurality of weight values.

The plurality of weight values assigned to each of the plurality of neural network layers may be optimized by a result of training the AI model. For example, the plurality of weight values may be updated to reduce or minimize a loss or cost value obtained in the AI model during a training process.

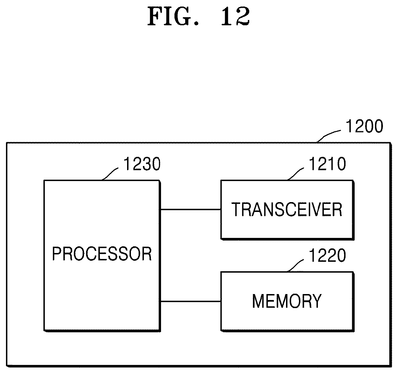

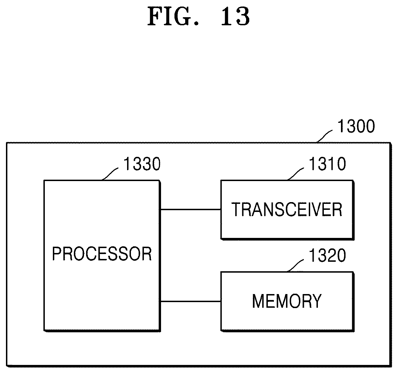

A device (e.g. a base station 1200 of FIG. 12 or a UE 1300 of FIG. 13)may obtain AI-based CSI based on at least one of channel Ĥ, V, PMI, and CQI.

For example, referring to FIGS. 4 and 5, the device 1200 or 1300 may apply at least one input data 401 to an AI model (or a CSI prediction model) 450 to thereby obtain output data 403 corresponding to a predetermined time resource. The AI model 450 may be trained to, when the at least one input data 401 is input, output the output data 403 corresponding to the predetermined time resource.

The input data 401 may correspond to at least one of Ĥ, V, PMI, CQI, or another type of CSI. The output data 403 may correspond to PMI, CQI, or another type of CSI.

For example, the device 1200 or 1300 may apply at least one precoding matrix V (**Vₜ₋₅₍ₖ₋₁₎, ..., Vₜ₋₅, Vₜ)** to the AI model 450 to thereby obtain precoding matrices (**Vₜ₊₁, Vₜ₊₂, Vₜ₊₃, Vₜ₊₄)** corresponding to predetermined time resources. The AI model 450 may be trained to output, when the at least one precoding matrix is input, output the precoding matrices corresponding to the predetermined time resources.

The device may apply at least one V to the AI model 450 to thereby obtain at least one PMI corresponding to a predetermined time resource. The AI model 450 may be trained to output, when the at least one V is input, the at least one PMI corresponding to the predetermined time resource.

The device may apply at least one V to the AI model 450 to thereby obtain at least one CQI corresponding to the predetermined time resource. The AI model 450 may be trained to output, when the at least one V is input, the at least one PMI corresponding to the predetermined time resource.

The device may apply at least one channel Ĥ to the AI model 450 to thereby obtain at least one precoding matrix corresponding to a predetermined time resource. The AI model 450 may be trained to output, when the at least one channel Ĥ is input, the at least one precoding matrix corresponding to the predetermined time resource.

The device may apply the at least one channel Ĥ to the AI model 450 to thereby obtain at least one PMI corresponding to the predetermined time resource. The AI model 450 may be trained to output, when the at least one channel Ĥ is input, the at least one PMI corresponding to the predetermined time resource.

The device may apply the at least one channel Ĥ to the AI model 450 to thereby obtain at least one CQI corresponding to the predetermined time resource. The AI model 450 may be trained to output, when the at least one channel Ĥ is input, the at least one CQI corresponding to the predetermined time resource.

The device may apply at least one CQI to the AI model 450 to thereby obtain at least one CQI corresponding to a predetermined time resource. The AI model 450 may be trained to output, when the at least one CQI is input, the at least one CQI corresponding to the predetermined time resource.

The device may apply at least one PMI to the AI model 450 to thereby obtain at least one precoding matrix corresponding to a predetermined time resource. The AI model 450 may be trained to output, when the at least one PMI is input, the at least one precoding matrix corresponding to the predetermined time resource.

The device 1200 or 1300 may apply the at least one PMI to the AI model 450 to thereby obtain at least one PMI corresponding to the predetermined time resource. The AI model 450 may be trained to output, when the at least one PMI is input, the at least one PMI corresponding to the predetermined time resource.

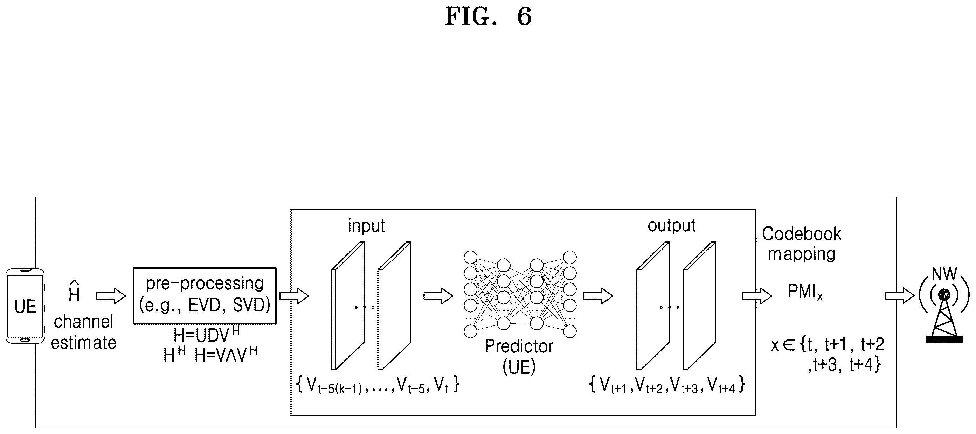

FIG. 6 is a diagram illustrating a UE performing AI-based CSI prediction, according to an embodiment of the present disclosure.

The UE may perform AI-based CSI prediction based on at least one reference signal and an AI model. By performing the AI-based CSI prediction, the UE may obtain CSI corresponding to a predetermined time resource. The UE may transmit the obtained CSI to the base station.

The predetermined time resource is position information on a time axis and may include at least one of a time resource between a CSI RS reception time and a CSI reporting time, or a time resource after the CSI reporting time.

The time resource may be identified in time units such as a subframe, slot, mini-slot, and symbol, but this is merely an example, and the time units are not limited to those described above.

Referring to FIG. 6, the UE may obtain, based on at least one CSI-RS, at least one of at least one channel Ĥ, at least one V, at least one PMI, or at least one CQI.

The UE may receive at least one CSI-RS from the base station. The UE may obtain a channel Ĥ by estimating a channel state (channel estimation) from the received RS. The UE may obtain the relationship of Ĥ = UDV^{H} based on a method such as EVD or SVD. The UE may generate, based on the channel Ĥ, an eigenvector V associated with a precoding matrix. The UE may obtain a PMI or CQI based on the channel Ĥ.

The UE may obtain AI-based CSI based on at least one of channel Ĥ, V, PMI, or CQI. For example, the UE may apply at least one precoding matrix V ( **Vₜ₋₅₍ₖ₋₁₎, ... , Vₜ₋₅**, **Vₜ** ) to an AI model to thereby obtain precoding matrices (**Vₜ₊₁, Vₜ₊₂, Vₜ₊₃, Vₜ₊₄**) corresponding to a predetermined time resource. The UE may identify at least one PMI based on the obtained precoding matrices. The UE may transmit CSI including the PMI to the base station.

The UE may apply at least one V to the AI model to thereby obtain at least one PMI corresponding to a predetermined time resource. The UE may apply the at least one V to the AI model to thereby obtain at least one CQI corresponding to the predetermined time resource.

The UE may apply at least one channel Ĥ to the AI model to thereby obtain at least one precoding matrix corresponding to a predetermined time resource. The UE may apply the at least one channel Ĥ to the AI model 450 to thereby obtain at least one PMI corresponding to the predetermined time resource.

The UE may apply the at least one channel Ĥ to the AI model to thereby obtain at least one CQI corresponding to the predetermined time resource. The UE may apply at least one CQI to the AI model to thereby obtain at least one CQI corresponding to a predetermined time resource.

The UE may apply at least one PMI to the AI model to thereby obtain at least one precoding matrix corresponding to a predetermined time resource. The UE may apply the at least one PMI to the AI model to thereby obtain at least one PMI corresponding to the predetermined time resource.

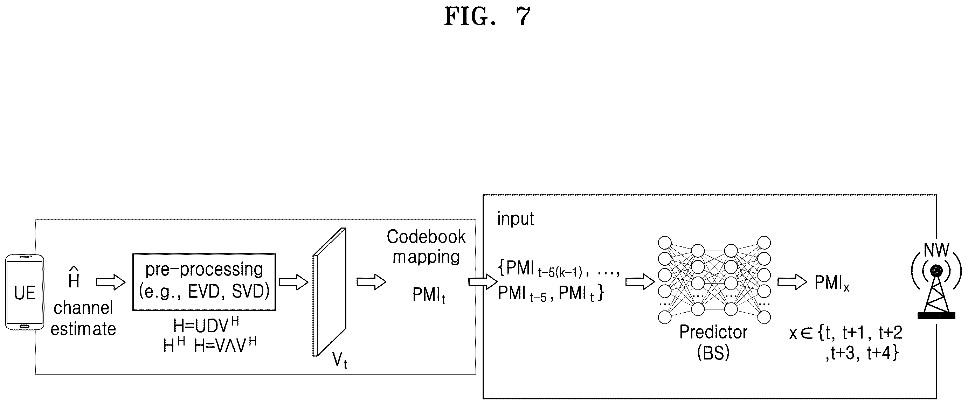

FIG. 7 is a diagram illustrating a base station performing AI-based CSI prediction, according to an embodiment of the present disclosure.

The base station may transmit at least one RS to the UE. The UE may obtain a channel Ĥ by estimating a channel state (channel estimation) from the received RS. The UE may generate, based on the channel Ĥ, an eigenvector V associated with a precoding matrix. The UE may obtain the relationship of Ĥ = UDV^{H} based on a method such as EVD or SVD. The UE may obtain CSI including a PMI or CQI based on the channel Ĥ. The UE may transmit the CSI to the base station.

The base station may perform AI-based CSI prediction based on at least one CSI and an AI model. By performing the AI-based CSI prediction, the base station may obtain CSI corresponding to a predetermined time resource. The base station may perform communication, such as scheduling the UE based on the CSI.

The predetermined time resource is positional information on a time axis and may include at least one of a time resource between CSI reporting points or a time resource after CSI reporting.

The predetermined time resource may be identified in time units such as a subframe, slot, mini-slot, or symbol, but this is merely an example, and the time units are not limited to those described above.

The base station may obtain AI-based CSI based on at least one of at least one PMI and at least one CQI. For example, referring to FIG. 7, the base station may apply at least one PMI (***PMI*ₜ₋₅₍ₖ₋₁₎, ...** *,* ***PMI*ₜ₋₅*_{,} PMI*ₜ**) to the AI model to thereby obtain at least one PMI corresponding to a predetermined time resource.

The base station may apply at least one PMI to the AI model to thereby obtain at least one precoding matrix corresponding to a predetermined time resource. The base station may apply at least one CQI to the AI model to thereby obtain a CQI corresponding to a predetermined time resource.

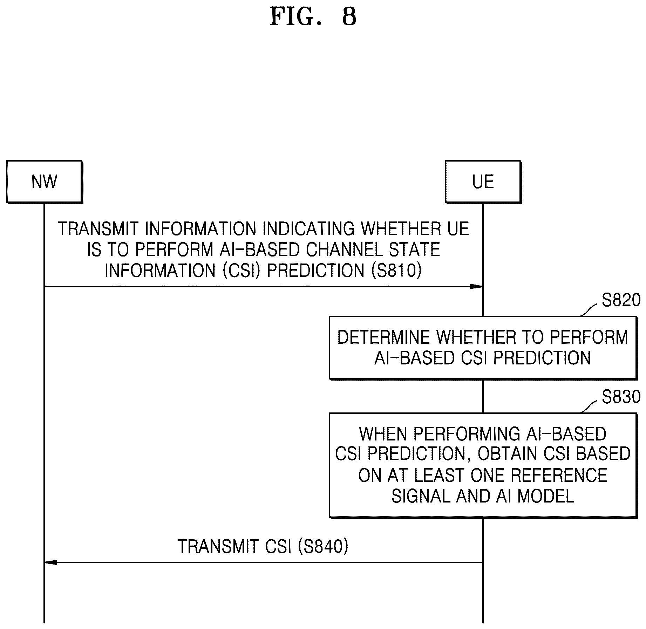

FIG. 8 is a flowchart of a method of performing CSI reporting according to an embodiment of the present disclosure.

In operation S810, a base station transmits, to a UE, information indicating whether the UE is to perform AI-based CSI prediction.

The UE may receive, from the base station, information indicating whether the UE is to perform AI-based CSI prediction.

In the present disclosure, information indicating whether the UE is to perform AI-based CSI prediction or reporting may also be referred to as UE prediction state information or UE measurement state information, but this is merely an example and the information is not limited to the examples described above.

UE prediction state information may indicate at least one of whether the UE will perform CSI prediction by using an AI model, whether the UE will perform CSI measurement without using an AI model, or whether the UE will report CSI obtained using an AI model.

The UE prediction state information may include 1-bit information indicating whether the UE is to perform AI-based CSI prediction or reporting.

For example, when the 1-bit information is set to '1', it may indicate that the UE will perform the AI-based CSI prediction or reporting (prediction on). When the 1-bit information is set to '0', it may indicate that the UE will not perform the AI-based CSI prediction or reporting (prediction off).

For example, when the 1-bit information is set to '0', it may indicate the UE will perform the AI-based CSI prediction or reporting (prediction on). When the 1-bit information is set to '1', it may indicate that the UE will not perform the AI-based CSI prediction or reporting (prediction off). However, this is merely an example, and the present disclosure is not limited to the above-described method.

When configured to enable the UE to perform AI-based CSI prediction or reporting, the UE prediction state information may further include 1-bit information indicating that the UE will determine a time resource for which to perform the prediction.

The UE prediction state information may be included in a DL message. The UE prediction state information may be transmitted in the form of at least one of a radio resource control (RRC) message, downlink control information (DCI), or media access control (MAC) control element (CE), but this is merely an example and the present disclosure is not limited to the stated examples.

When the UE prediction state information is included in an RRC message, the UE prediction state information may be included in a measurement configuration. The UE prediction state information may be included in at least one of measurement object information, CSI report configuration, or CSI resource configuration, but this is merely an example and the present disclosure is not limited to the stated examples. The CSI report configuration may include a codebook configuration.

In relation to AI-based CSI prediction or reporting, the UE may be configured, via higher- layer signaling (e.g., an RRC message), with at least one of at least one CSI report configuration, at least one CSI resource configuration, or at least one trigger state list.

Based on an RRC message, AI-based CSI prediction or AI-based CSI reporting may be configured as periodic, aperiodic, or semi-persistent.

When the UE prediction state information is transmitted in the form of MAC CE or DCI, AI-based CSI prediction or reporting by the UE may be triggered or activated/deactivated.

A trigger state may include an aperiodic trigger state, a semi-permanent trigger state, or the like. Each trigger state may include associated CSI report configurations. Based on at least one of MAC CE or DCI, the UE may activate or deactivate corresponding AI-based CSI prediction or reporting.

When UE mobility is higher than a certain level, when channel variation due to a delay is greater than a certain level, or when high-accuracy CSI is required, the UE prediction state information may indicate that the UE shall perform AI-based CSI prediction or reporting.

When a required reliability level is high or when a required latency constraint increases, the UE prediction state information may indicate that the UE will perform AI-based CSI prediction or reporting.

When the number of AI-operating UEs allocated to the network increases, when use cases utilizing AI increase, when available AI resources of the network are insufficient, when a reduction in AI resources of the network is required, when the network is not capable of operating AI, or when the UE needs to operate AI on its own, the UE prediction state information may indicate that the UE will perform AI-based CSI prediction or reporting.

When UE mobility is lower than a certain level, when a time correlation of a channel is higher than a certain level, when a precoding matrix with accuracy lower than a certain level is available, when AI operation on the UE is unnecessary, or when the network intends to operate AI on its own, the UE prediction state information may indicate that the UE will not perform AI-based CSI prediction or reporting.

When the required reliability is low, when the required CSI accuracy is low, when latency is low, or when sensitivity to retransmissions due to CSI prediction failure is low, the UE prediction state information may indicate that the UE will not perform AI-based CSI prediction or reporting.

When the UE is not capable of operating AI, when a reduction in power consumption of the UE is required, when a reduction in computing resources of the UE is required, when other AI usage in the UE is required, or when the network has sufficient resources for AI operation, the UE prediction state information may indicate that the UE will not perform AI-based CSI prediction or reporting.

In an embodiment, the UE may transmit, to the base station, a response message regarding whether the UE will perform AI-based CSI prediction.

In operation S820, the UE may determine whether to perform the AI-based CSI prediction.

Based on UE state information, the UE may determine whether to perform AI-based CSI prediction or reporting.

When the UE state information indicates that AI-based CSI prediction or reporting is to be performed, the UE may determine to obtain CSI by using an AI model. When the UE state information indicates that the AI-based CSI prediction or reporting is not to be performed, the UE may determine to perform CSI measurement without using an AI model.

In operation S830, when performing the AI-based CSI prediction, the UE may obtain CSI based on at least one reference signal and an AI model.

The UE may obtain at least one reference signal. For example, the UE may receive a reference signal from the base station.

The UE may perform the AI-based CSI prediction based on the at least one reference signal and the AI model. By performing the AI-based CSI prediction, the UE may obtain CSI corresponding to a predetermined time resource.

The UE may obtain, based on at least one CSI-RS, at least one of at least one channel Ĥ, at least one V, at least one PMI, or at least one CQI.

The UE may obtain AI-based CSI based on at least one of channel Ĥ, V, PMI, and CQI. The obtaining of AI-based CSI by the UE may correspond to the description of FIG. 6, and repeated descriptions may be omitted. The obtaining, by the UE, of CSI without using AI may correspond to the description of FIG. 2, and repeated descriptions may be omitted.

In operation S840, the UE may transmit the CSI to the base station.

The CSI may include at least one of AI-based CSI or CSI obtained without using AI. When the UE performs AI-based CSI prediction or reporting, the UE may transmit the AI-based CSI to the base station.

The base station may receive the CSI from the UE. The base station may determine whether to perform AI-based CSI prediction. When performing the AI-based CSI prediction, the base station may obtain at least one CSI corresponding to a predetermined time, based on at least one CSI including the received CSI and an AI model. The obtaining of AI-based CSI by the base station may correspond to the description of FIG. 7, and repeated descriptions may be omitted.

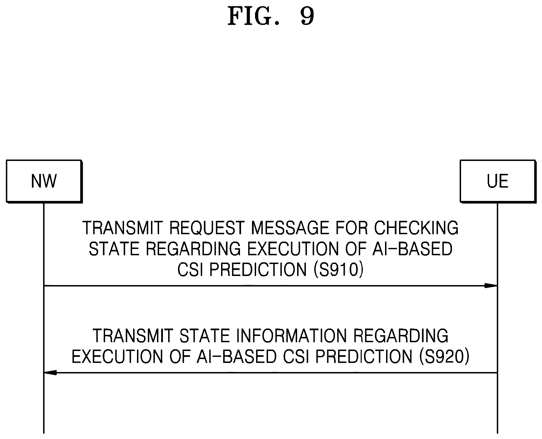

FIG. 9 is a flowchart illustrating transmitting status information related to performing AI-based CSI prediction, according to an embodiment of the present disclosure.

In operation S910, the base station may transmit, to the UE, a request message for checking a state of the UE regarding execution of AI-based CSI prediction.

The UE may receive, from the base station, the request message for checking the state regarding the execution of AI-based CSI prediction, which may be included in a DL message.

In the present disclosure, the request message for checking the state of the UE regarding AI-based CSI prediction may be referred to as any one of an AI preference request message, an AI prediction preference request message, an AI measurement preference request message, an AI capability request message, an AI prediction capability request message, an AI measurement capability request message, or a first message, but is not limited to the stated examples.

An AI preference request message may include a request message for checking at least one of whether the UE prefers AI-based CSI prediction or reporting, whether the UE is capable of performing or supports AI operation, a resource state for AI operation on the UE, or a battery state of the UE.

The AI preference request message may include 1-bit information regarding whether AI operation is preferred. For example, a '1' in the 1-bit information may indicate preference, while a '0' may indicate non-preference. For example, a '0' in the 1-bit information may indicate preference, while a '1' may indicate non-preference. However, this is merely an example, and the present disclosure is not limited to the above-described method.

The AI preference request message may be transmitted in the form of at least one of an RRC message, DCI, or MAC CE, but this is merely an example and the present disclosure is not limited to the stated examples.

For example, when included in an RRC message, the AI preference request message may be included in an RRC reconfiguration message or UE capability enquiry information.

When UE mobility is higher than a certain level, when channel variation due to a delay is greater than a certain level, or when high-accuracy CSI is required, the base station may transmit an AI preference request message to the UE.

When a required reliability level is high or when a required latency constraint increases, the base station may transmit an AI preference request message to the UE.

When the number of AI-operating UEs allocated to the network increases, when use cases utilizing AI in the network increase, when available AI resources of the network are insufficient or fall below a certain level, when a reduction in AI resources of the network is required, when the network is capable of operating AI, or when the UE needs to operate AI on its own, the base station may transmit an AI preference request message to the UE.

In operation S920, the UE may transmit, to the base station, state information regarding the execution of AI-based CSI prediction.

The UE may transmit, to the base station, the state information regarding the execution of AI-based CSI prediction. The state information regarding the execution of AI-based CSI prediction may be included in a UL message.

The state information regarding the execution of AI-based CSI prediction may be referred to as one of AI preference information, AI prediction preference information, AI measurement preference information, AI capability information, AI prediction capability information, and AI measurement capability information, but this is merely an example and the present disclosure is not limited to the stated examples.

The state information regarding the execution of AI-based CSI prediction may include information about at least one of whether the UE prefers AI-based CSI prediction or reporting, whether the UE is capable of performing or supports AI operation, a resource state for AI operation on the UE, or a battery state of the UE.

The state information regarding the execution of AI-based CSI prediction may be transmitted in the form of at least one of an RRC message, uplink control information (UCI), or MAC CE, but this is merely an example and the present disclosure is not limited to the stated examples.

For example, when included in an RRC message, the state information regarding the execution of AI-based CSI prediction may be included in UE assistance information or UE capability information.

When the base station transmits an AI preference request message to the UE, the UE may transmit, to the base station, state information regarding execution of AI-based CSI prediction as a response message.

In an embodiment, operation S910 may be omitted. Regardless of whether an AI preference request message is received, the UE may transmit, to the base station, state information regarding execution of AI-based CSI prediction. For example, when the UE periodically performs UL transmission, the UE may transmit, to the base station, state information regarding the execution of AI-based CSI prediction even if an AI preference request message is not received.

In a state in which the UE does not perform AI-based CSI prediction, if the UE desires a higher key performance indicator (KPI), if the UE can secure an amount of AI-operable resources greater than or equal to a threshold, or if a battery level of the UE is higher than or equal to a certain level, the UE may transmit, to the base station, state information regarding the execution of AI-based CSI prediction.

In this case, the state information regarding the execution of AI-based CSI prediction may indicate that the UE prefers AI-based CSI prediction or reporting, or that the UE is capable of performing AI-based CSI prediction or reporting.

In a state in which the UE performs the AI-based CSI prediction, if the UE desires a lower KPI, when the amount of AI-operable resources of the UE is less than or equal to a threshold, if the battery level of the UE is lower than or equal to a certain level, if it is difficult for the UE to continue performing AI-based CSI prediction, or if the UE intends to request the base station to change an AI operation entity, the UE may transmit state information regarding the execution of AI-based CSI prediction to the base station.

In this case, the state information regarding the execution of AI-based CSI prediction may indicate that the UE does not prefer AI-based CSI prediction or reporting, or that the UE is not capable of performing AI-based CSI prediction or reporting.

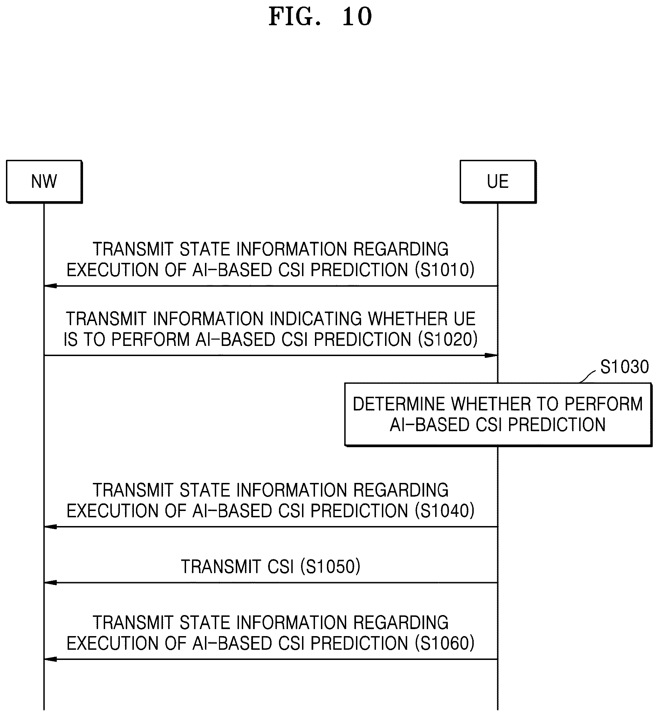

FIG. 10 is a flowchart of a method of performing CSI reporting, according to an embodiment of the present disclosure.

In operation S1010, the UE may transmit, to the base station, state information regarding execution of AI-based CSI prediction.

The UE may transmit, to the base station, the state information regarding the execution of AI-based CSI prediction. The state information regarding the execution of AI-based CSI prediction may be included in a UL message.

The state information regarding the execution of AI-based CSI prediction may be referred to as one of AI preference information, AI prediction preference information, AI measurement preference information, AI capability information, AI prediction capability information, and AI measurement capability information, but is not limited to the stated examples.

The state information regarding the execution of AI-based CSI prediction may include information about at least one of whether the UE prefers AI-based CSI prediction or reporting, whether the UE is capable of performing or supports AI operation, a resource state for AI operation on the UE, or a battery state of the UE.

The state information regarding the execution of AI-based CSI prediction may be transmitted in the form of at least one of an RRC message, DCI, or MAC CE, but this is merely an example and the present disclosure is not limited to the stated examples.

For example, when included in an RRC message, the state information regarding the execution of AI-based CSI prediction may be included in UE assistance information or UE capability information.

When the base station transmits an AI preference request message to the UE, the UE may transmit, to the base station, state information regarding execution of AI-based CSI prediction as a response message. The method may further include an operation of the UE receiving an AI preference request message from the base station. Details regarding the AI preference request message may correspond to the description of operation S910, and repeated descriptions may be omitted.

Regardless of whether an AI preference request message is received, the UE may transmit, to the base station, state information regarding execution of AI-based CSI prediction.

For example, when the UE periodically performs UL transmission, the UE may transmit, to the base station, state information regarding the execution of AI-based CSI prediction even if an AI preference request message is not received.

In a state in which the UE does not perform AI-based CSI prediction, if the UE desires a higher KPI, if the UE can secure an amount of AI-operable resources greater than or equal to a threshold, or if a battery level of the UE is higher than or equal to a certain level, the UE may transmit, to the base station, state information regarding the execution of AI-based CSI prediction.

In this case, the state information regarding the execution of AI-based CSI prediction may indicate that the UE prefers AI-based CSI prediction or reporting, or that the UE is capable of performing AI-based CSI prediction or reporting.

In a state in which the UE performs the AI-based CSI prediction, if the UE desires a lower KPI, if the amount of AI-operable resources of the UE is less than or equal to a threshold, if the battery level of the UE is lower than or equal to a certain level, if it is difficult for the UE to continue performing AI-based CSI prediction, or if the UE intends to request the base station to change an AI operation entity, the UE may transmit state information regarding the execution of AI-based CSI prediction to the base station.

In this case, the state information regarding the execution of AI-based CSI prediction may indicate that the UE does not prefer AI-based CSI prediction or reporting, or that the UE is not capable of performing AI-based CSI prediction or reporting.

In operation S1020, the base station transmits, to the UE, information indicating whether the UE is to perform AI-based CSI prediction.

The UE may receive, from the base station, the information indicating whether the UE is to perform the AI-based CSI prediction.

In the present disclosure, information indicating whether the UE is to perform AI-based CSI prediction or reporting may also be referred to as UE prediction state information or UE measurement state information, but this is merely an example and the information is not limited to the examples described above.

UE prediction state information may indicate at least one of whether the UE will perform CSI prediction by using an AI model, whether the UE will perform CSI measurement without using an AI model, or whether the UE will report CSI obtained using an AI model.

The UE prediction state information may include 1-bit information indicating whether the UE will perform AI-based CSI prediction or reporting.

For example, when the 1-bit information is set to '1', it may indicate that the UE will perform the AI-based CSI prediction or reporting (prediction on). When the 1-bit information is set to '0', it may indicate that the UE will not perform the AI-based CSI prediction or reporting (prediction off).

When configured to enable the UE to perform AI-based CSI prediction or reporting, the UE prediction state information may further include 1-bit information indicating that the UE will determine a time resource for which to perform the prediction.

The UE prediction state information may be included in a DL message. The UE prediction state information may be transmitted in the form of at least one of an RRC message, DCI, or MAC CE, but this is merely an example and the present disclosure is not limited to the stated examples.

When the UE prediction state information is included in an RRC message, the UE prediction state information may be included in a measurement configuration. The UE prediction state information may be included in at least one of measurement object information, CSI report configuration, or CSI resource configuration, but this is merely an example and the present disclosure is not limited to the stated examples. The CSI report configuration may include a codebook configuration.

In relation to AI-based CSI prediction or reporting, the UE may be configured, via higher- layer signaling (e.g., an RRC message), with at least one of at least one CSI report configuration, at least one CSI resource configuration, or at least one trigger state list.

Based on an RRC message, AI-based CSI prediction or AI-based CSI reporting may be configured as periodic, aperiodic, or semi-persistent.

When the UE prediction state information is transmitted in the form of MAC CE or DCI, AI-based CSI prediction or reporting by the UE may be triggered or activated/deactivated.

A trigger state may include an aperiodic trigger state, a semi-permanent trigger state, or the like. Each trigger state may include associated CSI report configurations. Based on at least one of MAC CE or DCI, the UE may activate or deactivate corresponding AI-based CSI prediction or reporting.

Based on the state information regarding the execution of AI-based CSI prediction, the base station may transmit the UE prediction state information to the UE.

When UE mobility is higher than a certain level, when channel variation due to a delay is greater than a certain level, or when high-accuracy CSI is required, the UE prediction state information may indicate that the UE will perform AI-based CSI prediction or reporting.

When a required reliability level is high, or when a required latency constraint increases, the UE prediction state information may indicate that the UE will perform AI-based CSI prediction or reporting.

When the number of AI-operating UEs allocated to the network increases, when use cases utilizing AI increase, when available AI resources of the network are insufficient, when a reduction in AI resources of the network is required, when the network is not capable of operating AI, or when the UE needs to operate AI on its own, the UE prediction state information may indicate that the UE will perform AI-based CSI prediction or reporting.

When UE mobility is lower than a certain level, when a time correlation of a channel is higher than a certain level, when a precoding matrix with accuracy lower than a certain level is available, when AI operation on the UE is unnecessary, or when the network intends to operate AI on its own, the UE prediction state information may indicate that the UE will not perform AI-based CSI prediction or reporting.

When the required reliability is low, when the required CSI accuracy is low, when latency is low, or when sensitivity to retransmissions due to CSI prediction failure is low, the UE prediction state information may indicate that the UE will not perform AI-based CSI prediction or reporting.

When the UE is not capable of operating AI, when a reduction in power consumption of the UE is required, when a reduction in computing resources of the UE is required, when other AI usage in the UE is required, or when the network has sufficient resources for AI operation, the UE prediction state information may indicate that the UE will not perform AI-based CSI prediction or reporting.

In operation S1030, the UE may determine whether to perform the AI-based CSI prediction.

Based on UE state information, the UE may determine whether to perform AI-based CSI prediction or reporting.

When the UE state information indicates that AI-based CSI prediction or reporting is to be performed, the UE may determine to obtain CSI by using an AI model. When the UE state information indicates that the AI-based CSI prediction or reporting is not to be performed, the UE may determine to perform CSI measurement without using an AI model.

In an embodiment, the UE may transmit, to the base station, a response message regarding whether the UE will perform AI-based CSI prediction.

The obtaining of AI-based CSI by the UE may correspond to the descriptions of FIG. 6 and operation S830, and repeated descriptions may be omitted. The obtaining, by the UE, of CSI without using AI may correspond to the description of FIG. 2, and repeated descriptions may be omitted.

In operation S1040, the UE may transmit, to the base station, state information regarding execution of AI-based CSI prediction.

Operation S1040 may correspond to operation S1010, and repeated descriptions may be omitted.

In operation S1050, the UE may transmit CSI to the base station.

The CSI may include at least one of AI-based CSI or CSI obtained without using AI. When the UE performs AI-based CSI prediction or reporting, the UE may transmit the AI-based CSI to the base station.

The base station may receive the CSI from the UE. The base station may determine whether to perform AI-based CSI prediction. When performing the AI-based CSI prediction, the base station may obtain at least one CSI corresponding to a predetermined time, based on at least one CSI including the received CSI and an AI model. The obtaining of AI-based CSI by the base station may correspond to the description of FIG. 7, and repeated descriptions may be omitted.

In operation S1060, the UE may transmit, to the base station, state information regarding execution of AI-based CSI prediction.

Operation S1060 may correspond to operation S1010, and repeated descriptions may be omitted.

In an embodiment of the present disclosure, at least one of operations S1010, S1040, or S1060 may be omitted. The network may determine whether the UE is capable of performing AI operation and whether the UE prefers AI operation. When the UE is required to participate in AI operation while it is not operating AI, the network may check whether the UE is capable of operating the AI.

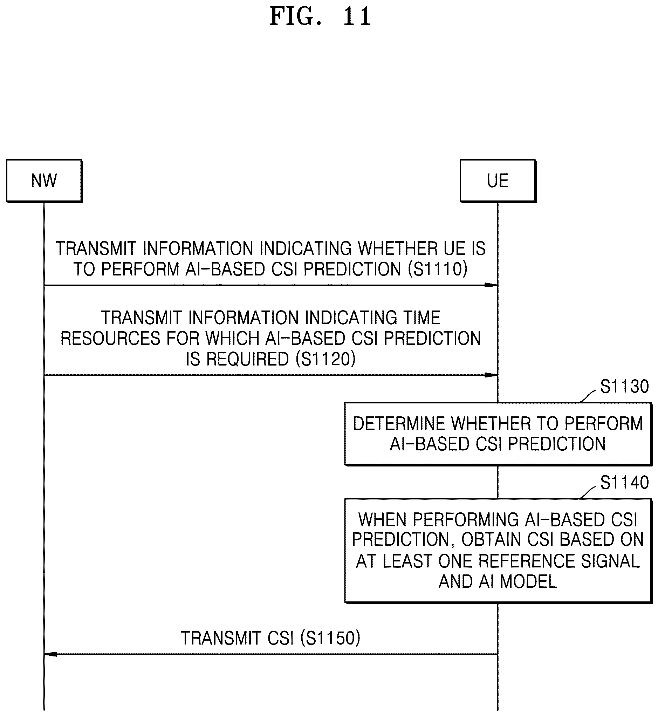

FIG. 11 is a flowchart of a method of performing CSI reporting, according to an embodiment of the present disclosure.

In operation S1110, the base station transmits, to the UE, information indicating whether the UE is to perform AI-based CSI prediction.

The UE may receive, from the base station, the information indicating whether the UE is to perform the AI-based CSI prediction.

In the present disclosure, information indicating whether the UE is to perform AI-based CSI prediction or reporting may also be referred to as UE prediction state information or UE measurement state information, but this is merely an example and the information is not limited to the examples described above.

The UE prediction state information may indicate at least one of whether the UE will perform CSI prediction by using an AI model, whether the UE will perform CSI measurement without using an AI model, or whether the UE will report CSI obtained using an AI model.

The UE prediction state information may include 1-bit information indicating whether the UE will perform AI-based CSI prediction or reporting.

For example, when the 1-bit information is set to '1', it may indicate that the UE will perform the AI-based CSI prediction or reporting (prediction on). When the 1-bit information is set to '0', it may indicate that the UE will not perform the AI-based CSI prediction or reporting (prediction off).

When configured to enable the UE to perform AI-based CSI prediction or reporting, the UE prediction state information may further include 1-bit information indicating that the UE will determine a time resource for which to perform the prediction.

The UE prediction state information may be included in a DL message. The UE prediction state information may be transmitted in the form of at least one of an RRC message, DCI, or MAC CE, but this is merely an example and the present disclosure is not limited to the stated examples.

When UE prediction state information is included in an RRC message, the UE prediction state information may be included in a measurement configuration. The UE prediction state information may be included in at least one of measurement object information, CSI report configuration, or CSI resource configuration, but this is merely an example and the present disclosure is not limited to the stated examples. The CSI report configuration may include a codebook configuration.

In relation to AI-based CSI prediction or reporting, the UE may be configured, via higher- layer signaling (e.g., an RRC message), with at least one of at least one CSI report configuration, at least one CSI resource configuration, or at least one trigger state list.

Based on an RRC message, AI-based CSI prediction or AI-based CSI reporting may be configured as periodic, aperiodic, or semi-persistent.

When the UE prediction state information is transmitted in the form of MAC CE or DCI, AI-based CSI prediction or reporting by the UE may be triggered or activated/deactivated.

A trigger state may include an aperiodic trigger state or a semi-permanent trigger state. Each trigger state may include associated CSI report configurations. Based on at least one of MAC CE or DCI, the UE may activate or deactivate corresponding AI-based CSI prediction or reporting.

When UE mobility is higher than a certain level, when channel variation due to a delay is greater than a certain level, or when high-accuracy CSI is required, the UE prediction state information may indicate that the UE will perform AI-based CSI prediction or reporting.

When a required reliability level is high or when a required latency constraint increases, the UE prediction state information may indicate that the UE will perform AI-based CSI prediction or reporting.

When the number of AI-operating UEs allocated to the network increases, when use cases utilizing AI increase, when available AI resources of the network are insufficient, when a reduction in AI resources of the network is required, when the network is not capable of operating AI, or when the UE needs to operate AI on its own, the UE prediction state information may indicate that the UE will perform AI-based CSI prediction or reporting.

When UE mobility is lower than a certain level, when a time correlation of a channel is higher than a certain level, when a precoding matrix with accuracy lower than a certain level is available, when AI operation on the UE is unnecessary, or when the network intends to operate AI on its own, the UE prediction state information may indicate that the UE will not perform AI-based CSI prediction or reporting.

When the required reliability is low, when the required CSI accuracy is low, when latency is low, or when sensitivity to retransmissions due to CSI prediction failure is low, the UE prediction state information may indicate that the UE will not perform AI-based CSI prediction or reporting.

When the UE is not capable of operating AI, when a reduction in power consumption of the UE is required, when a reduction in computing resources of the UE is required, when other AI usage in the UE is required, or when the network has sufficient resources for AI operation, the UE prediction state information may indicate that the UE will not perform AI-based CSI prediction or reporting.

Based on state information regarding the execution of AI-based CSI prediction, the base station may transmit UE prediction state information to the UE. The base station may receive, from the UE, the state information regarding the execution of AI-based CSI prediction. The receiving of the state information regarding the execution of AI-based CSI prediction may correspond to the descriptions of S920 or S1010, and repeated descriptions may be omitted.

In operation S1120, the base station transmits, to the UE, information indicating time resources for which the AI-based CSI prediction is required.

The UE may receive, from the base station, the information indicating the time resources for which CSI prediction is required. The information indicating the time resources may be included in a DL message.

The information indicating the time resources may represent position information on the time axis corresponding to CSI to be obtained. The information indicating the time resources may include information about at least one of a starting time resource index, the number of consecutive time resources, an interval, a periodicity during which the configuration remains consistent, a pattern, a format, or a mapping type. For example, the base station may transmit, to the UE, the information indicating the time resources, which includes a slot index or a slot format index.

The information indicating the time resources may be transmitted in the form of at least one of an RRC message, DCI, or a MAC CE, but this is merely an example and the present disclosure is not limited to the stated examples.

When the information indicating the time resources is transmitted via an RRC message, the UE may be semi-statically allocated the time resources. When the information indicating the time resources is transmitted using DCI, the UE may be dynamically allocated the time resources.

In an embodiment of the present disclosure, the base station may omit the operation of transmitting the information indicating the time resources, or transmit information indicating time resources configured by default.

For example, when CSI reporting has a short period (or periodicity), when a correlation between slots is high, when the UE determines time resources, or when the base station determines that slot index designation is unnecessary, the base station may omit the operation of transmitting information indicating time resources, or transmit information indicating time resources with a slot index set to 0.
When CSI reporting has a long period (or periodicity), when the correlation between slots is low, or when the base station desires to newly configure or change time resources, the base station may transmit, to the UE, information indicating time resources.

Although a slot is used as an example for convenience of descriptions, this is merely an example, and time units such as a subframe, mini-slot, or symbol may be used and are not limited to the stated examples.

In an embodiment, the UE transmits, to the base station, information indicating time resources for which AI-based CSI prediction is required.

The time resources for which the AI-based CSI prediction is required represent time resources corresponding to CSI that the UE has obtained or will obtain using the AI model, and the UE may determine the time resources. The UE may transmit, to the base station, information indicating the determined time resources.

The information indicating the time resources may represent position information on the time axis corresponding to CSI to be obtained. The information indicating the time resources may include information about at least one of a starting time resource index, the number of consecutive time resources, an interval, a periodicity during which the configuration remains consistent, a pattern, a format, or a mapping type.

For example, the base station may transmit, to the UE, the information indicating the time resources, which includes a slot index or a slot format index.

The UE may transmit, to the base station, information indicating time resources for which CSI prediction is required. The information indicating the time resources may be included in a UL message.

The information indicating the time resources may be transmitted in the form of at least one of an RRC message, UCI, or a MAC CE, but this is merely an example and the present disclosure is not limited to the stated examples.

When the information indicating the time resources is transmitted via an RRC message, the UE may configure the time resources semi-statically. When the information indicating the time resources is transmitted using DCI, the UE may configure the time resources dynamically.

In an embodiment of the present disclosure, the UE may omit the operation of transmitting the information indicating the time resources, or transmit information indicating time resources configured by default.

For example, when CSI reporting has a short period (or periodicity), when a correlation between slots is high, or when the UE determines that slot index designation is unnecessary, the UE may omit the operation of transmitting information indicating time resources, or transmit information indicating time resources with a slot index set to 0.

When CSI reporting has a long period (or periodicity), when the base station has no capability information about an AI model of the UE, when the base station is unable to identify which slot index the UE is capable of performing CSI prediction for, or when the UE desires to newly configure or change time resources, the UE may transmit to the base station) information indicating the time resources.

Although a slot is used as an example for convenience of descriptions, this is merely an example, and time units such as a subframe, mini-slot, or symbol may be used and are not limited to the stated examples.

In operation S1130, the UE may determine whether to perform AI-based CSI prediction.

Based on UE state information, the UE may determine whether to perform the AI-based CSI prediction or reporting.

When the UE state information indicates that AI-based CSI prediction or reporting is to be performed, the UE may determine to obtain CSI by using an AI model. When the UE state information indicates that the AI-based CSI prediction or reporting is not to be performed, the UE may determine to perform CSI measurement without using an AI model.

In an embodiment, the UE may transmit, to the base station, a response message regarding whether the UE will perform AI-based CSI prediction.

In operation S1140, when performing the AI-based CSI prediction, the UE may obtain CSI based on at least one reference signal and an AI model.

The UE may obtain at least one reference signal. The UE may receive a reference signal from the base station.

The UE may perform AI-based CSI prediction based on at least one reference signal and an AI model. By performing the AI-based CSI prediction, the UE may obtain CSI corresponding to a predetermined time resource.

The UE may obtain, based on at least one CSI-RS, at least one of at least one channel Ĥ, at least one V, at least one PMI, or at least one CQI.

The UE may obtain AI-based CSI based on at least one of channel Ĥ, V, PMI, and CQI. The obtaining of AI-based CSI by the UE may correspond to the description of FIG. 6, and repeated descriptions may be omitted. The obtaining, by the UE, of CSI without using AI may correspond to the description of FIG. 2, and repeated descriptions may be omitted.

In operation S1150, the UE may transmit the CSI to the base station.

The CSI may include at least one of AI-based CSI or CSI obtained without using AI. When the UE performs AI-based CSI prediction or reporting, the UE may transmit the AI-based CSI to the base station.

The base station may receive the CSI from the UE. The base station may determine whether to perform AI-based CSI prediction. When performing the AI-based CSI prediction, the base station may obtain at least one CSI corresponding to a predetermined time, based on at least one CSI including the received CSI and an AI model. The obtaining of AI-based CSI by the base station may correspond to the description of FIG. 7, and repeated descriptions may be omitted.

FIG. 12 is a block diagram schematically illustrating a configuration of the base station 1200 according to an embodiment of the present disclosure.

Referring to FIG. 12, the base station 1200 may include a transceiver 1210, a processor 1230, and memory 1220. In accordance with the communication method of the base station 1200 described above, the transceiver 1210, the processor 1230, and the memory 1220 of the base station 1200 may operate. However, the components of the base station 1200 are not limited to the above example.

For example, the base station 1200 may include more or fewer components than the components described above. In an embodiment, the transceiver 1210, the processor 1230, and the memory 1220 may be implemented in the form of a single chip. In addition, the processor 1230 may include one or more processors.

The transceiver 1210 is a collective term for a transmitter of the base station 1200 and a receiver of the base station 1200, and may transmit and receive signals to and from a UE or network entity. The signals transmitted to and received from the UE or network entity may include control information and data. To achieve this, the transceiver 1210 may be composed of an RF transmitter for up-converting and amplifying a frequency of a signal being transmitted, and an RF receiver for low-noise amplifying a received signal and down-converting its frequency. However, this is merely an embodiment of the transceiver 1210, and components of the transceiver 1210 are not limited to the RF transmitter and the RF receiver.

Additionally, the transceiver 1210 may perform functions for transmitting and receiving signals via a radio channel. For example, the transceiver 1210 may receive a signal via a radio channel and output the signal to the processor 1230 and transmit a signal output from the processor 1230 via a radio channel.

The memory 1220 may store data and programs necessary for operations of the base station 1200. Furthermore, the memory 1220 may store control information or data in a signal obtained by the base station 1200. The memory 1220 may include a storage medium such as read-only memory (ROM), random access memory (RAM), hard disk, compact disc ROM (CD-ROM), and digital video disc (DVD), or a combination of the storage media. Furthermore, the memory 1220 may not exist separately, but may be configured to be included in the processor 1230. The memory 1220 may consist of volatile memory, non-volatile memory, or a combination of volatile memory and non-volatile memory. The memory 1220 may also provide stored data according to a request from the processor 1230.

The processor 1230 may control a series of processes such that the base station 1200 may operate according to the embodiment of the present disclosure. For example, the processor 1230 may receive control signals and data signals via the transceiver 1210 and process the received control signals and data signals. The processor 1230 may transmit the processed control signals and data signals via the transceiver 1210. In addition, the processor 1230 may write data to and read data from the memory 1220. The processor 1230 may perform functions of a protocol stack required by communication standards. To this end, the processor 1230 may include at least one processor or microprocessor. In an embodiment, a portion of the transceiver 1210 or the processor 1230 may be referred to as a communication processor (CP).

The processor 1230 may consist of one or a plurality of processors. In this case, the one or plurality of processors may be a general-purpose processor such as a CPU, an AP, a DSP, etc., a dedicated graphics processor, such as a GPU and a VPU, or a dedicated AI processor, such as an NPU. For example, when the one or plurality of processors is a dedicated AI processor, the dedicated AI processor may be designed with a hardware structure specialized for processing a specific AI model.

According to an embodiment of the present disclosure, the processor 1230 may transmit, to a UE, information indicating whether the UE is to perform AI-based CSI prediction. The processor 1230 may receive CSI from the UE. When the UE performs the AI-based CSI prediction, the CSI may be obtained based on at least one reference signal and a first AI model.

According to an embodiment of the present disclosure, the processor 1230 may obtain AI-based CSI based on at least one CSI including CSI and a second AI model.

According to an embodiment of the present disclosure, the processor 1230 may receive, from the UE, state information regarding execution of AI-based CSI prediction.

According to an embodiment of the present disclosure, the processor 1230 may transmit, to the UE, a request message for checking a state of the UE regarding the execution of AI-based CSI prediction.

According to an embodiment of the present disclosure, the processor 1230 may transmit, to the UE, information indicating time resources for which AI-based CSI prediction is required.

According to an embodiment of the present disclosure, the processor 1230 may receive, from the UE, information indicating prediction resources for which AI-based CSI prediction is required.

According to an embodiment of the present disclosure, the processor 1230 may receive, from the UE, a response message indicating whether the UE is to perform the AI-based CSI prediction.

FIG. 13 is a block diagram schematically illustrating a configuration of the UE 1300, according to an embodiment of the present disclosure.

Referring to FIG. 13, the UE 1300 may include a transceiver 1310, a processor 1330, and memory 1320. In accordance with the communication method of the UE 1300 described above, the transceiver 1310, the processor 1330, and the memory 1320 of the UE 1300 may operate. However, the components of the UE 1300 are not limited to the above example.

For example, the UE 1300 may include more or fewer components than the components described above. In an embodiment, the transceiver 1310, the processor 1330, and the memory 1320 may be implemented in the form of a single chip. In addition, the processor 1330 may include one or more processors.

The transceiver 1310 is a collective term for a transmitter of the UE 1300 and a receiver of the UE 1300, and may transmit and receive signals to and from a base station or network entity. The signals transmitted to and received from the UE or network entity may include control information and data. To achieve this, the transceiver 1310 may be composed of an RF transmitter for up-converting and amplifying a frequency of a signal being transmitted, and an RF receiver for low-noise amplifying a received signal and down-converting its frequency. However, this is merely an embodiment of the transceiver 1310, and components of the transceiver 1310 are not limited to the RF transmitter and the RF receiver.

Additionally, the transceiver 1310 may perform functions for transmitting and receiving signals via a radio channel. For example, the transceiver 1310 may receive a signal via a radio channel and output the signal to the processor 1330 and transmit a signal output from the processor 1330 via a radio channel.

The memory 1320 may store data and programs necessary for operations of the UE 1300. Furthermore, the memory 1320 may store control information or data in a signal obtained from the base station. The memory 1320 may include a storage medium such as ROM, RAM, hard disk, CD-ROM, and DVD, or a combination of the storage media. Furthermore, the memory 1320 may not exist separately, but may be configured to be included in the processor 1330. The memory 1320 may consist of volatile memory, non-volatile memory, or a combination of volatile memory and non-volatile memory. The memory 1320 may also provide stored data according to a request from the processor 1330.

The processor 1330 may control a series of processes such that the UE 1300 may operate according to the embodiment of the present disclosure. For example, the processor 1330 may receive control signals and data signals via the transceiver 1310 and process the received control signals and data signals. The processor 1330 may transmit the processed control signals and data signals via the transceiver 1310. In addition, the processor 1330 may write data to and read data from the memory 1320. The processor 1330 may perform functions of a protocol stack required by communication standards. To this end, the processor 1330 may include at least one processor or microprocessor. In an embodiment, a portion of the transceiver 1310 or the processor 1330 may be referred to as a CP.

The processor 1330 may consist of one or a plurality of processors. In this case, the one or plurality of processors may be a general-purpose processor such as a CPU, an AP, a DSP, etc., a dedicated graphics processor, such as a GPU and a VPU, or a dedicated AI processor, such as an NPU. For example, when the one or plurality of processors is a dedicated AI processor, the dedicated AI processor may be designed with a hardware structure specialized for processing a specific AI model.

According to an embodiment of the present disclosure, the processor 1330 may receive, from a base station, information indicating whether the UE is to perform AI-based CSI prediction. At least one processor 1330 may determine, based on the information, whether to perform the AI-based CSI prediction, and when performing the AI -based CSI prediction, obtain CSI based on at least one reference signal and a first AI model. The at least one processor 1330 may transmit the CSI to the base station'.

According to an embodiment of the present disclosure, the processor 1330 may transmit, to the base station, state information regarding execution of AI-based CSI prediction.

According to an embodiment of the present disclosure, the processor 1330 may receive, from the base station, a request message for checking a state of the UE regarding the execution of AI-based CSI prediction.

According to an embodiment of the present disclosure, the processor 1330 may receive, from the base station, information indicating time resources for which the UE is required to perform the AI-based CSI prediction.

According to an embodiment of the present disclosure, the processor 1330 determine time resources for which the AI-based CSI prediction is required. The processor 1330 may transmit, to the base station, information indicating the time resources.

According to an embodiment of the present disclosure, the processor 1330 may transmit, to the base station, a response message indicating whether the UE is to perform the AI-based CSI prediction.

According to an embodiment of the present disclosure, a method performed by a UE in a wireless communication system is provided. The method may include receiving, from a base station, information indicating whether the UE is to perform AI-based CSI prediction. The method may include determining, based on the information, whether to perform the AI-based CSI prediction. The method may include, when performing the AI-based CSI prediction, obtaining CSI based on at least one reference signal and a first AI model. The method may include transmitting the CSI.

According to an embodiment of the present disclosure, the method may include transmitting, to the base station, state information regarding execution of the AI-based CSI prediction.

According to an embodiment of the present disclosure, the method may include receiving, from the base station, a request message for checking a state of the UE regarding the execution of the AI-based CSI prediction.

According to an embodiment of the present disclosure, the method may include receiving, from the base station, information indicating time resources for which the UE is required to perform the AI-based CSI prediction.

According to an embodiment of the present disclosure, the method may include determining time resources for which the AI-based CSI prediction is required. According to an embodiment of the present disclosure, the method may include transmitting, to the base station, information indicating the time resources.

According to an embodiment of the present disclosure, the method may include transmitting, to the base station, a response message regarding whether the UE is to perform the AI-based CSI prediction.

According to an embodiment of the present disclosure, a method performed by a base station in a wireless communication system is provided. The method may include transmitting, to a UE, information indicating whether the UE is to perform AI-based CSI prediction. The method may include receiving CSI from the UE. When the UE performs the AI-based CSI prediction, the CSI may be obtained based on at least one reference signal and a first AI model.

According to an embodiment of the present disclosure, the method may include obtaining AI-based CSI based on at least one CSI including CSI and a second AI model.

According to an embodiment of the present disclosure, the method may include receiving, from the UE, state information regarding execution of the AI-based CSI prediction.

According to an embodiment of the present disclosure, the method may include transmitting, to the UE, a request message for checking a state of the UE regarding the execution of the AI-based CSI prediction.

According to an embodiment of the present disclosure, the method may include transmitting, to the UE, information indicating time resources for which the AI-based CSI prediction is required.

According to an embodiment of the present disclosure, the method may include receiving, from the UE, information indicating prediction resources for which the AI-based CSI prediction is required.

According to an embodiment of the present disclosure, the method may include receiving, from the UE, a response message regarding whether the UE is to perform the AI-based CSI prediction.

Various embodiments of the present disclosure may be implemented or supported by one or more computer programs, and the computer programs may be generated from computer-readable program code and recorded on computer-readable media.

In the present disclosure, an "application" and a "program" refer to one or more computer programs, software components, a set of instructions, procedures, functions, objects, classes, instances, associated data, or portions thereof, which are suitable for implementation in computer-readable program code. The "computer-readable program code" may include various types of computer code including source code, object code, and executable code.

The "computer-readable media" may include various types of media that are accessible by a computer, such as ROM, RAM, a hard disk drive (HDD), CDs, DVDs, or various other types of memory.

Furthermore, a machine-readable storage medium may be provided in the form of a non-transitory storage medium. In this regard, the 'non-transitory storage medium' is a tangible device, and may exclude wired, wireless, optical, or other communication links through which transient electrical or other signals are transmitted. Moreover, the 'non-transitory storage medium' does not differentiate between where data is semi-permanently stored in the storage medium and where the data is temporarily stored in the storage medium.

For example, the 'non-transitory storage medium' may include a buffer for temporarily storing data. The computer-readable media may be any available media that are accessible by the computer and may include both volatile and non-volatile media and both detachable and non-detachable media. The computer-readable media may include media in which data may be permanently stored and media in which data may be stored and then overwritten, such as a rewritable optical disk or an erasable memory device.

According to an embodiment, methods according to various embodiments set forth herein may be included in a computer program product when provided. The computer program product may be traded, as a product, between a seller and a buyer.

The computer program product may be distributed in the form of a machine-readable storage medium (e.g., CD-ROM) or distributed (e.g., downloaded or uploaded) on-line via an application store or directly between two user devices (e.g., smartphones).

For online distribution, at least a part of the computer program product (e.g., a downloadable app) may be at least transiently stored or temporally generated in a machine-readable storage medium such as a memory of a server of a manufacturer, a server of an application store, or a relay server.

According to the embodiment of the present disclosure, a method and device for performing CSI reporting using AI may be provided, which compensate for a situation in which a channel changes between transmission of a CSI-RS, reporting of CSI, and actual use of the CSI.

The effects of the present disclosure are not limited to the above-described effects, and other effects not described herein will be readily understood by those skilled in the art from the detailed description and the claims.

The above description of the present disclosure is provided for illustration, and it will be understood by those of ordinary skill in the art that changes in form and details may be readily made therein without departing from technical idea or essential characteristics of the present disclosure. For example, adequate effects may be achieved even when the above-described techniques are performed in a different order than that described above, and/or the aforementioned components of the systems, structures, devices, circuits, etc. are coupled or combined in different forms and modes than those described above or are replaced or supplemented by other components or their equivalents.

Accordingly, the above-described embodiments and all aspects thereof are merely examples and are not limiting. For example, each component defined as an integrated component may be implemented in a distributed fashion, and likewise, components defined as separate components may be implemented in an integrated form. For example, some of the operations in FIGS. 8 to 11 may be performed in a combined form or in a distributed manner.

The scope of the present disclosure is defined not by the detailed description thereof but by the following claims, and all the changes or modifications within the meaning and scope of the appended claims and their equivalents should be construed as being included in the scope of the present disclosure.

## Claims

1. A method performed by a user equipment (UE), the method comprising:
receiving, from a base station, information indicating whether the UE is to perform artificial intelligence (AI)-based channel state information (CSI) prediction;
determining, based on the information, whether to perform the AI-based CSI prediction;
when performing the AI-based CSI prediction, obtaining CSI based on at least one reference signal and a first AI model; and
transmitting the CSI to the base station.

2. The method of claim 1, further comprising transmitting, to the base station, state information regarding execution of the AI-based CSI prediction.

3. The method of claim 2, further comprising receiving, from the base station, a request message for checking a state of the UE regarding the execution of the AI-based CSI prediction.

4. The method of claim 1, further comprising receiving, from the base station, information indicating time resources for which the UE is required to perform the AI-based CSI prediction.

5. The method of claim 1, further comprising:
determining time resources for which the AI-based CSI prediction is required; and
transmitting, to the base station, information indicating the time resources.

6. The method of claim 1, further comprising transmitting, to the base station, a response message regarding whether the UE is to perform the AI-based CSI prediction.

7. A method performed by a base station in a wireless communication system, the method comprising:
transmitting, to a user equipment (UE), information indicating whether the UE is to perform artificial intelligence (AI)-based channel state information (CSI) prediction; and
receiving CSI from the UE;
wherein, when the UE performs the AI-based CSI prediction, the CSI is obtained based on at least one reference signal and a first AI model.

8. The method of claim 7, further comprising obtaining AI-based CSI based on at least one CSI including CSI and a second AI model.

9. The method of claim 7, further comprising receiving, from the UE, state information regarding execution of the AI-based CSI prediction.

10. The method of claim 9, further comprising transmitting, to the UE, a request message for checking a state of the UE regarding the execution of the AI-based CSI prediction.

11. The method of claim 7, further comprising transmitting, to the UE, information indicating time resources for which the AI-based CSI prediction is required.

12. The method of claim 7, further comprising receiving, from the UE, information indicating prediction resources for which the AI-based CSI prediction is required.

13. The method of claim 7, further comprising receiving, from the UE, a response message regarding whether the UE is to perform the AI-based CSI prediction.

14. A user equipment (UE) in a wireless communication system, the UE comprising:
a transceiver; and
at least one processor coupled to the transceiver,
wherein the at least one processor is configured to receive, from a base station, information indicating whether the UE is to perform artificial intelligence (AI)-based channel state information (CSI) prediction,
determine, based on the information, whether to perform the AI-based CSI prediction,
when performing the AI-based CSI prediction, obtain CSI based on at least one reference signal and a first AI model, and
transmit the CSI to the base station.

15. A base station in a wireless communication system, the base station comprising:
a transceiver; and
at least one processor coupled to the transceiver,
wherein the at least one processor is configured to transmit, to a user equipment (UE), information indicating whether the UE is to perform artificial intelligence (AI)-based channel state information (CSI) prediction, and
receive CSI from the UE,
wherein, when the UE performs the AI-based CSI prediction, the CSI is obtained based on at least one reference signal and a first AI model.
